# FASCICULE DE BREVET EUROPEEN

(11) **EP 0 514 238 B1**
(45) Date de publication et mention de la délivrance du brevet: **14.06.1995**
(21) Numéro de dépôt: 92401227.1
(22) Date de dépôt: 30.04.1992
(51) Int. Cl.: B60T 13/569, B60T 8/44, B60T 13/52

(54) **Servomoteur pneumatique**
Pneumatischer Servomotor
Pneumatic servomotor

(30) Priorité: 14.05.1991 FR 9105844
(43) Date de publication de la demande: 19.11.1992
(73) Titulaire: ALLIEDSIGNAL EUROPE SERVICES TECHNIQUES, 93700 Drancy (FR)
(72) Inventeur: Gautier, Jean-Pierre, Bendix Europe Services Tech., F-93700 Drancy (FR); Verbo, Ulysse, Bendix Europe Services Tech., F-93700 Drancy (FR); Perez, Migüel, Bendix Europe Services Tech., F-93700 Drancy (FR)
(74) Mandataire: Bentz, Jean-Paul

(56) Documents cités:
- WO-A-90/05081
- DE-A- 3 821 225
- DE-A- 3 918 012
- DE-B- 1 277 047
- GB-A- 2 103 320
- US-A- 4 033 636
- PATENT ABSTRACTS OF JAPAN vol. 8, no. 262 (M-341)(1699) 30 Novembre 1984 & JP-A 59 134048

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique une paroi mobile rappelée dans sa position arrière de repos par un moyen élastique et qui définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire d'un plongeur sur une tige de poussée.

De tels servomoteurs, s'ils ont un fonctionnement satisfaisant, présentent néanmoins quelques inconvénients. C'est ainsi que, en cas de défaillance de la source de dépression, soit parce que le moteur du véhicule est arrêté, soit encore qu'une canalisation de dépression soit détériorée ou coupée, lorsque le conducteur du véhicule désire freiner, non seulement celui-ci ne bénéficie plus de l'assistance que lui fournissait le servomoteur, mais encore il a à vaincre l'effort dû au moyen élastique de rappel de la paroi mobile, classiquement un ressort hélicoïdal de compression. Cet effort est typiquement de vingt kilogrammes au début de l'actionnement du servomoteur, et souvent supérieur à cette valeur. Le servomoteur devient alors une gêne pour le conducteur.

D'autre part, ce moyen élastique de rappel peut également être une gêne pour le conducteur du véhicule. même en dehors des périodes de non fonctionnement de la source de dépression, par exemple lors d'un freinage brusque. Le conducteur exerce alors sur la pédale de freinage un effort important, et l'amplification de cet effort a pour premier effet de comprimer le ressort de rappel de la paroi mobile, dissipant ainsi une certaine quantité d'énergie alors que le conducteur du véhicule en éprouve un besoin urgent. Il est donc désirable que dans ces cas aussi, le servomoteur ne constitue pas une gêne pour le conducteur.

On connaît du document US-A-4 033 636, correspondant au préambule de la revendication principale, un servomoteur du type rappelé ci-dessus, et dans lequel le moyen élastique de rappel de la paroi mobile comprend un ressort pneumatique, disposé dans la chambre avant du servomoteur, des moyens de raccordement sélectif étant prévus pour raccorder sélectivement le ressort pneumatique à l'une d'au moins deux sources de pression différentes.

Une telle disposition a pour but d'assister ou de contrecarrer l'effort exercé par le conducteur du véhicule en fonction de l'état d'un capteur d'antiblocage des roues coopérant avec des moyens de valve de commutation. Le servomoteur comprend deux actionneurs à diaphragme, dont l'un seulement agit pour assister l'effort de freinage, les deux actionneurs agissant pour s'opposer à l'effort de freinage, et ainsi pour réduire la possibilité pour le conducteur de surmonter un fonctionnement en antiblocage des roues pendant un freinage de panique.

Dans ce contexte, la présente invention a pour objet de prévoir un servomoteur qui fournisse l'assistance requise dans les conditions normales de fonctionnement et qui ne présente aucune résistance lors d'une défaillance de la source de dépression.

Elle a également pour objet un servomoteur dans lequel l'effort que doit fournir le conducteur du véhicule pour vaincre l'action du ressort de rappel sur la paroi mobile pour la ramener dans sa position de repos soit le plus faible possible.

A cette fin, le servomoteur de l'invention est essentiellement caractérisé en ce qu'un disque de réaction est disposé entre le plongeur et la tige de poussée, et en ce que le servomoteur comprend un détecteur de freinage pour commander les moyens de raccordement sélectif en fonction de l'apparition ou de la disparition d'une action de freinage et produire une assistance supplémentaire et sélective de freinage à l'apparition d'une telle action de freinage.

Les moyens de raccordement sélectif sont avantageusement agencés pour raccorder le ressort pneumatique à ladite source de dépression lorsqu'une situation de freinage est détectée, et pour raccorder le ressort pneumatique à une source de pression fournissant une pression au moins égale à la pression atmosphérique lorsque la disparition d'une situation de freinage est détectée.

Dans un mode de réalisation simple, le ressort pneumatique comprend une membrane fixée de façon étanche à la paroi avant de l'enveloppe et à un voile rigide fixé de façon étanche au piston ou à la tige de poussée.

Le détecteur de freinage peut être au moins sensible à l'apparition d'une pression relative déterminée dans la chambre arrière et être constitué par la partie capteur d'une valve pneumatique.

D'autres buts, caractéristiques et avantages ressortiront de la description qui suit d'un mode de réalisation de la présente invention, donnée à titre non limitatif, en référence aux dessins annexés dans lesquels :
- La Figure 1 est une vue de côté, en demi-coupe longitudinale, représentant la partie centrale d'un servomoteur pneumatique d'assistance au freinage réalisé conformément à la présente invention,
- La Figure 2 est une vue schématique d'une valve pneumatique pouvant être mise en oeuvre avec le servomoteur de l'invention,
- La Figure 3 est une vue schématique d'une autre valve pneumatique pouvant être mise en oeuvre avec le servomoteur de l'invention,
- La Figure 4 est une vue en coupe d'encore un autre mode de réalisation d'une valve pouvant être mise en oeuvre avec le servomoteur de l'invention,
- La Figure 5 est une vue en demi-coupe d'un servomoteur pneumatique pour la commande d'une valve selon la Figure 4, et
- Les Figures 6 et 6A sont des vues en coupe d'un servomoteur pneumatique et d'une valve selon un autre mode de réalisation de l'invention.

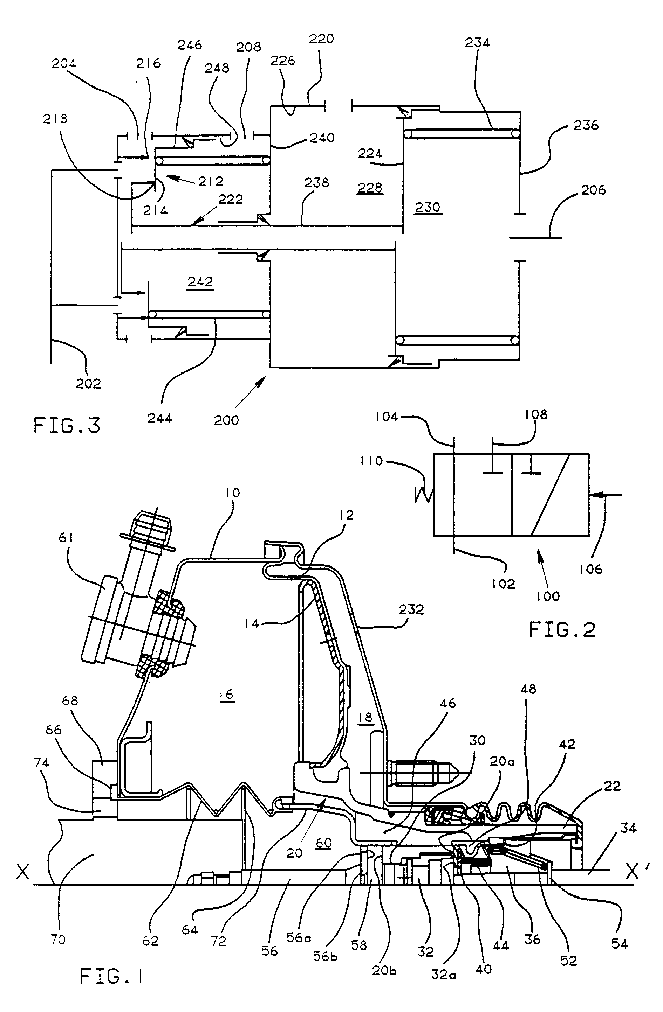

La Figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle "avant" du servomoteur, la direction dans laquelle les pièces mobiles du servomoteur se déplacent lorsqu'elles sont actionnées et "arrière" la direction qu'elles prennent pour revenir dans leur position de repos. Sur les Figures, l'avant est situé à gauche et l'arrière à droite.

Le servomoteur de la Figure 1 comprend une enveloppe extérieure 10 en forme de coquille, présentant une symétrie de révolution autour d'un axe X-X'.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X' du servomoteur. Ce piston creux 20 se prolonge vers l'arrière sous la forme d'une partie tubulaire 22 qui traverse de façon étanche la paroi arrière de l'enveloppe 10.

Dans sa partie centrale située entre la partie arrière tubulaire 22 et la partie avant dans laquelle sont fixées la membrane 12 et la jupe 14, le piston 20 présente un alésage 30 dans lequel est reçu en coulissement un plongeur 32 présentant également une symétrie de révolution autour de l'axe X-X'. L'extrémité avant d'une tige de commande 34 du servomoteur, disposée également selon l'axe X-X', est montée rotulante dans le plongeur 32. L'extrémité arrière (non représentée) de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire du piston 20 débouche vers l'atmosphère extérieure à l'arrière du servomoteur, par exemple par l'intermédiaire d'un filtre à air. Vers l'avant, ce même espace annulaire peut communiquer avec la chambre arrière 18 au travers d'un passage radial (non représenté) formé dans la partie centrale du piston, lorsque des moyens d'assistance commandés par le plongeur 32 sont actionnés.

De façon classique, ces moyens d'assistance comprennent une valve trois voies comportant un clapet annulaire 40 monté dans la partie tubulaire du piston et deux sièges de valve annulaires 20a et 32a formés respectivement sur la partie centrale du piston 20 et sur le plongeur 32.

Le clapet 40 constitue l'extrémité avant, de plus petit diamètre d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer le clapet 40 vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort 44.

Un second passage 46 est formé dans la partie centrale du piston 20 approximativement parallèlement à son axe X-X', pour faire communiquer la chambre avant 16 du servomoteur avec une chambre annulaire 48 formée autour du clapet 40, à l'intérieur de la partie tubulaire 22 du piston 20. Lorsque le plongeur 32 occupe sa position arrière de repos illustrée sur la Figure 1, dans laquelle le clapet 40 est en appui étanche sur le siège 32a du plongeur 32 et écarté du siège 20a du piston 20, les chambres avant 16 et arrière 18 du servomoteur communiquent ainsi entre elles par le passage 46, la chambre annulaire 48 et le passage radial.

Le plongeur 32 est normalement maintenu dans la position arrière de repos définie par un organe de butée au moyen d'un ressort de compression 52 interposé entre la coupelle 42 et une rondelle 54 elle-même en appui sur un épaulement formé sur la tige de commande 34.

Dans sa partie centrale, le piston 20 comprend une face avant annulaire 20b au centre de laquelle débouche l'alésage 30. Cette face avant annulaire 20b du piston 20 agit sur une face arrière 56a d'une tige de poussée 56, au travers d'un disque de réaction 58 en un matériau déformable tel qu'un élastomère. De façon plus précise, la tige de poussée 56 et le disque de réaction 58 sont disposés selon l'axe X-X' du servomoteur, dans le prolongement de la tige de commande 34 et du plongeur 32. La surface arrière 56a de la tige de poussée 56 est formée sur une plaque en forme de disque 56b constituant l'extrémité arrière de la tige 56.

Le fonctionnement de ce servomoteur connu est classique et peut être décrit succinctement de la façon suivante.

Lorsque le servomoteur est installé sur un véhicule, la chambre avant 16 communique en permanence avec une source de vide, par exemple par un embout 61 qui peut inclure un clapet anti-retour.

Dans un premier temps, l'effort sur la pédale de frein éffectué par le conducteur a pour effet d'égaler l'effort de précontrainte du ressort 52 diminué de l'effort de précontrainte du ressort 44. Ensuite, au cours du léger déplacement de la tige de commande 34 et du plongeur 32, le clapet 40, sous l'action du ressort 44, suit le siège 32a du plongeur 32, jusqu'à ce qu'il vienne au contact du siège 20a du piston ; les chambres avant 16 et arrière 18 du servomoteur sont alors isolées l'une de l'autre.

Dans une deuxième phase de l'actionnement du frein, le plongeur 32 est déplacé suffisamment vers l'avant pour que le clapet 40 soit en contact étanche avec le siège 20a du piston et commence à s'éloigner du siège 32a du plongeur. Dans ces conditions, la chambre arrière 18 du servomoteur est isolée de la chambre avant 16 et entre en communication avec l'atmosphère.

Il s'ensuit donc qu'une différence de pressions s'établit sur les deux faces de la jupe 14 du piston 20 et sollicite ce dernier vers l'avant, et qu'ainsi une assistance au freinage est obtenue, la force exercée par la tige de poussée 56 sur le piston du maître-cylindre étant supérieure à la force exercée par le conducteur sur la tige de commande 34.

Lors d'un défreinage, lorsque l'action sur la tige de commande 34 diminue, cette dernière est sollicitée vers l'arrière par le ressort 52 et entraîne le plongeur 32, ce qui fait se fermer le passage de valve 32a-40 et s'ouvrir le passage de valve 20a-40. Les chambres avant 16 et arrière 18 sont donc à nouveau en communication, et les pressions sur les deux faces de la jupe 14 tendent à s'égaliser. De façon classique, un ressort de compression (non représenté) interposé entre le piston 20 et la paroi avant de l'enveloppe 10 sollicite le piston 20 et la jupe 14 vers l'arrière vers leur position de repos.

C'est justement ce ressort qui devient une gêne lors d'une défaillance de la source de dépression. En effet, le conducteur ne bénéficie plus alors d'assistance puisque, la chambre avant n'étant plus sous dépression, les pressions sur les deux faces de la jupe 14 sont constamment égales. Cet inconvénient se trouve encore aggravé par le fait que la force exercée par la tige de poussée 56 sur le piston du maître-cylindre est inférieure à la force exercée par le conducteur sur la tige de commande 34, la différence étant dissipée dans l'éffort de compression du ressort de rappel du piston 20, au moins égale à vingt kilogrammes.

Cet inconvénient est éliminé grâce à l'invention. En effet, on voit sur la Figure 1 qu'on a disposé, dans la chambre avant 16 du servomoteur, une chambre additionnelle 60. Dans l'exemple représenté, cette chambre additionnelle 60 est obtenue à l'aide d'une membrane tubulaire souple 62. Des anneaux 64 sont disposés alternativement à l'intérieur et à l'extérieur de cette membrane, pour lui permettre de se comprimer et de se détendre axialement, sans subir de déformation notables dans un sens radial. La membrane tubulaire 62 est fixée de façon étanche à son extrémité avant à la paroi avant de l'enveloppe 10, avantageusement sur les bords de l'ouverture prévue pour recevoir un maître-cylindre, par exemple par un bourrelet 66 emprisonné entre la paroi avant de l'enveloppe 10 et une bride 68 d'un maître-cylindre 70. De même, l'extrémité arrière de la membrane tubulaire 62 est fixée de façon étanche sur le bord périphérique extérieur d'un voile rigide 72 de forme générale tronconique, dont la partie arrière est elle-même fixée de façon étanche au piston 20 ou à la tige de poussée 56.

Conformément à l'invention, la chambre additionnelle 60 est reliée à l'atmosphère, par exemple par une ouverture 74 dans la paroi avant de l'enveloppe 10 et/ou dans la bride 68 du maître-cylindre 70.

Le fonctionnement du servomoteur qui vient d'être décrit se comprendra aisément. Lorsque la source de dépression reliée à la chambre avant 16 par l'embout 61 fonctionne normalement, on a vu plus haut que les chambres avant 16 et arrière 18 communiquent entre elles au repos. L'ensemble du servomoteur se trouve donc sous une pression réduite, à l'exception de la chambre additionnelle 60 où règne la pression atmosphérique. Cette pression atmosphérique s'exerce sur la face tournée vers l'avant du voile 72, dont la face tournée vers l'arrière est soumise à la pression réduite.

Il existe donc une force, dirigée vers l'arrière, s'exerçant sur le voile 72 et donc sur le piston 20 duquel il est solidaire. La chambre avant 16 étant constamment en communication avec la source de' dépression, on a donc bien une force de rappel du piston 20 dans sa position arrière de repos, grâce à la chambre additionnelle 60 jouant le rôle d'un ressort pneumatique.

Selon un aspect particulièrement avantageux de l'invention, on voit que la différence des pressions s'exerçant sur les deux faces du voile est constante, la chambre avant 16 étant en permanence sous pression réduite et le ressort pneumatique 60 étant en permanence sous pression atmosphérique. La force exercée par le voile 72 sur le piston 20 pour le ramener dans sa position de repos lors d'un défreinage est constante. Il en est également ainsi lors d'un freinage.

Ceci signifie que l'effort déployé par le conducteur et amplifié par le servomoteur n'est amputé que d'une fraction constante tout au long de la course du piston 20, à l'inverse d'un ressort hélicoïdal classique où l'effort nécessaire pour le comprimer augmente à mesure que le piston 20 avance. L'invention permet également ce dernier type de fonctionnement classique, avec une force de rappel croissante en fonction de la course du piston 20, simplement en obturant l'ouverture 74.

Par un choix approprié de la surface du voile 72, ou plus exactement de sa projection dans un plan perpendiculaire à l'axe X-X', c'est-à-dire encore le diamètre de l'extrémité avant du voile 72 à laquelle est raccordée la membrane 62, on pourra déterminer avec précision la force de rappel exercée par le ressort pneumatique, pour par exemple qu'elle soit voisine, au début de l'actionnement du servomoteur, de celle d'un ressort hélicoïdal classique afin que le fonctionnement des autres parties du servomoteur conserve les mêmes caractéristiques et offre les même possibilités, par exemple pour le réglage du saut ou de la course morte, et afin que le conducteur du véhicule équipé du servomoteur de l'invention ne soit pas perturbé dans ses habitudes.

Lorsque la source de dépression reliée à l'embout 61 devient défaillante, la pression atmosphérique s'installe dans la chambre avant 16. Elle s'installe immédiatement si l'embout 61 n'est pas pourvu d'un clapet anti-retour encore appelé "clapet de retenue de vide", ou après deux ou trois actions de freinage si un tel clapet est prévu, la pression dans la chambre avant augmentant à chaque défreinage lorsqu'elle est mise en communication avec la chambre arrière 18 où règne la pression atmosphérique établie lors du freinage correspondant. L'ensemble du servomoteur, c'est-à-dire la chambre avant 16, la chambre arrière 18 et le ressort pneumatique 60, se trouve donc sous la pression atmosphérique. En particulier, les pressions sur les faces avant et arrière du voile 72 sont égales et le ressort pneumatique 60 est devenu totalement inopérant, n'exerçant plus aucune force sur le piston 20.

Il n'y a donc plus de force de rappel du piston 20 vers l'arrière à l'intérieur du servomoteur. Le piston 20 est cependant sollicité vers l'arrière par les ressorts de rappel du ou des pistons du maître-cylindre et de la pédale de freinage reliée à la tige de commande 34, ces ressorts engendrant une force que l'on peut juger acceptable pour un fonctionnement en défaillance.

On pourra prévoir que la pression dans le ressort pneumatique soit supérieure à la pression atmosphérique. Cette variante présente divers avantages. Par exemple, dans le cas de défaillance de la source de dépression expliqué ci-dessus, les chambres avant 16 et arrière 18 se retrouvent rapidement toutes deux à la pression atmosphérique. Si la pression dans le ressort pneumatique 60 est supérieure à la pression atmosphérique, il y aura alors sur les deux faces du voile 72 une différence des pressions créant une force de rappel le ramenant dans sa position de repos. La pression dans le ressort pneumatique 60 pourra être choisie pour créer une force de rappel du piston 20 suffisante pour ne pas entraver le fonctionnement du maître-cylindre 70, et bien inférieure à celle qui est créée lorsque la source de dépression fonctionne normalement pour éviter de rétablir la gêne pour le conducteur mentionnée plus haut.

Un autre avantage de disposer dans le ressort pneumatique 60 d'une pression supérieure à la pression atmosphérique réside dans le fait qu'on pourra diminuer la surface du voile 72 par l'intermédiaire duquel cette force est créée et transmise au piston 20 en cas de non défaillance de la source de dépression.

On a donc bien réalisé conformément à l'invention, un servomoteur dont le fonctionnement est identique à celui d'un servomoteur classique lorsque les conditions normales sont remplies, c'est-à-dire où le piston 20 est constamment soumis à une force de rappel, et où cette force de rappel n'existe plus ou est minime en cas de défaillance de la source de dépression. Dans ce dernier cas, le conducteur ne bénéficie plus de l'assistance au freinage, mais n'est plus non plus handicapé par cette' force de rappel. Les actions de freinage en seront donc beaucoup plus efficaces qu'avec un servomoteur classique.

Un avantage important de la présente invention est qu'il est possible de tirer parti du ressort pneumatique 60 pour rendre les actions de freinage également plus efficaces lorsque la source de dépression ne présente pas de défaillance. En effet, en modulant la pression dans la chambre additionnelle 60, on peut également diminuer ou annuler la force de rappel du piston 20 lors d'une action de freinage, et rétablir cette force de rappel lors d'un défreinage. Il suffit pour cela de diminuer la pression dans le ressort pneumatique 60 lors du freinage, et, la chambre 16 restant constamment sous pression réduite, la force de rappel du piston 20 née de la différence des pressions sur les deux faces du voile diminuera dans les mêmes proportions. En rétablissant la pression dans le ressort pneumatique 60 lors d'un défreinage, la force de rappel augmentera jusqu'à sa valeur initiale maximum lorsque le servomoteur est au repos.

La modulation de la pression dans le ressort pneumatique 60 peut être obtenue de différentes façons. Elle peut être commandée manuellement par le conducteur du véhicule, mais il est évidemment préférable qu'elle soit commandée automatiquement. L'invention prévoit donc de tels moyens de commande automatique de la pression dans le ressort pneumatique 60 en fonction de l'état d'actionnement du servomoteur. Ces moyens sont avantageusement constitués par une valve pneumatique à trois voies et deux positions, comportant une sortie reliée au ressort pneumatique 60, cette sortie pouvant sélectivement être mise en communication avec l'atmosphère ou avec la source de dépression, selon l'état de fonctionnement dans lequel se trouve le servomoteur.

La Figure 2 représente schématiquement une telle valve désignée dans son ensemble par la référence 100. Elle comporte une sortie 102, destinée à être reliée à l'ouverture 74 et au ressort pneumatique 60 du servomoteur de la Figure 1, et qui est reliée, dans la position de repos représentée sur la Figure 2, à une entrée 104 mise à l'atmosphère.

Dans la position de repos, le ressort pneumatique 60 est donc bien relié à l'atmosphère. Lorsque le servomoteur est actionné pour un freinage, la valve est basculée dans sa deuxième position par un signal de commande 106, position dans laquelle la sortie 102 communique avec une entrée 108 reliée à la source de dépression. Le ressort pneumatique 60 est donc alors relié à la source de dépression et n'exerce donc plus de force de rappel sur le piston 20. Lorsque le servomoteur revient à sa position de repos, le signal de commande 106 est interrompu et la valve pneumatique revient elle-même dans sa position de repos, par exemple sous l'effet d'un moyen de rappel 110 comme par exemple un ressort. Le signal de commande peut par exemple être pneumatique, et consister en l'augmentation de pression dans la chambre arrière 18 du servomoteur. Il peut également être électrique, et être formé par le circuit électrique d'avertissement de freinage (pour l'allumage des feux "stop") ou par un capteur de la pression régnant dans la chambre arrière 18 du servomoteur, la valve 100 étant alors une électrovalve.

Au lieu d'utiliser une valve à tiroir ou un distributeur comme on l'a schématisé sur la Figure 2, on peut utiliser une valve à clapet comme on l'a schématisé sur la Figure 3.

On voit sur la Figure 3 une valve pneumatique 200, qui comporte une sortie 202 destinée à être reliée à l'ouverture 74 et au ressort pneumatique 60 du servomoteur de la Figure 1, et qui comporte une entrée 204 reliée à l'atmosphère et une entrée 208 reliée à la source de dépression. Elle comporte également une valve à trois voies 212 formée par un clapet 214 coopérant avec deux sièges de valve 216 et 218. Le siège de valve 216 est fixe et est formé sur le corps 220 de la valve pneumatique 200. Le siège de valve 218 est mobile et est formé sur un ensemble mobile 222.

La valve 200 comporte une partie capteur et une partie émetteur. La partie capteur est constituée d'un piston 224 coulissant de façon étanche dans un alésage 226 du corps 220, et faisant partie de l'ensemble mobile 222. Le piston 224 divise l'alésage 226 en une chambre 228 dans laquelle règne en permanence la pression atmosphérique, et une chambre 230 reliée par une communication 206 à la chambre arrière 18 du servomoteur de la Figure 1, par exemple par une ouverture 232 pratiquée dans la paroi arrière de l'enveloppe 10. Un ressort de compression 234 est de plus disposé dans la chambre 230 entre le piston 224 et la paroi terminale 236 de l'alésage 226. Le piston 224 porte une tige 238 qui traverse de façon étanche une paroi intermédiaire 240 de la valve 200 pour pénétrer dans la partie émetteur de la valve.

La partie émetteur de la valve 200 comporte une chambre 242, dans laquelle pénètre donc la tige 238 faisant partie de l'ensemble mobile 222. La chambre 242 comporte ainsi l'autre extrémité de la tige 238, sur laquelle est formé le siège de valve mobile 218. Elle comporte donc aussi le clapet 214 et le siège de valve fixe 216. Elle est reliée par l'entrée 208 à la source de dépression et par l'entrée 204 à l'atmosphère. Enfin, un ressort 244 sollicite le clapet 214 en direction des sièges de valve fixe 216 et mobile 218, le clapet 214 étant formé sur un piston 246 coulissant de façon étanche dans un alésage 248 formé dans le corps 220 de la valve.

Le fonctionnement de la valve pneumatique 200 se déduit aisément des explications qui précèdent en relation avec la Figure 3. Lorsque le servomoteur de la Figure 1 est en position de repos, la pression réduite régnant dans sa chambre arrière 18 est transmise, via l'ouverture 232 et la communication 206, à la chambre 230 de la valve pneumatique 200. Cette pression réduite règne donc sur une des faces du piston 224, sur l'autre face duquel règne la pression atmosphérique présente dans la chambre 228.

Le piston 224 est donc sollicité vers l'arrière (en considérant la Figure 3) à l'encontre de l'action du ressort 234, ainsi qu'on l'a représenté sur la moitié supérieure de la Figure 3. Ce faisant, la tige 238 est elle même sollicitée vers l'arrière, ainsi que le siège de valve mobile 218 qui vient s'appuyer sur le clapet 214, lui-même sollicité vers l'avant par le ressort 244. Le clapet 214 se trouve alors écarté du siège de valve fixe 216. Le passage de valve 214-216 est donc alors ouvert et permet la communication entre l'entrée 204 à la pression atmosphérique et la sortie 202 communiquant avec le ressort pneumatique 60.

Comme on l'a expliqué plus haut, une force de rappel est donc créée sur le piston 20.

Lors de l'actionnement du servomoteur de la Figure 1 au cours d'un freinage, on a vu également plus haut que la pression dans la chambre arrière 18 augmente jusqu'à atteindre la pression atmosphérique. Cette augmentation de pression est transmise à la chambre 230 de la valve 200 par l'ouverture 232 et la communication 206. Les forces exercées sur les deux faces du piston 224 résultant des pressions qui s'y exercent variant, et particulièrement le piston 224 ne se trouvant plus sollicité vers l'arrière, le piston 224 va se mouvoir vers l'avant (en considérant la Figure 3) sous l'action du ressort 234. Dans ce mouvement, il entraîne la tige 238 et le siège de valve mobile 218 vers l'avant. Le clapet 214, étant sollicité vers l'avant par le ressort 244, va rester au contact du siège de valve 218 dans son mouvement vers l'avant, jusqu'à ce qu'il vienne au contact du siège de valve fixe 216, laissant alors le siège de valve 218 s'éloigner de lui.

Le passage de valve 214-216, entre l'entrée 204 et la sortie 202 se trouve donc fermé, tandis que le passage de valve 214-218 entre la chambre 242 et la sortie 202 se trouve ouvert, comme on l'a représenté sur la moitié inférieure de la Figure 3. Il s'ensuit donc que la sortie 202 n'est plus reliée à l'atmosphère régnant à l'entrée 204, mais à la dépression régnant à l'entrée 208, et qu'ainsi la pression dans le ressort pneumatique va décroître de la pression atmosphérique à une valeur égale à la pression réduite de la source de dépression.

Avantageusement grâce à l'invention, par un choix judicieux des tarages des ressorts 234 et 244 et du jeu entre les sièges de valve 216, 218 et le clapet 214, on pourra obtenir que la pression à la sortie 202 de la valve 200 soit inversement proportionnelle à la pression à l'entrée 206. Ce qui signifie que la force de rappel exercée par le ressort pneumatique 60 sur le piston 20 sera inversement proportionnelle à la pression dans la chambre arrière 18 du servomoteur, ou encore que plus le conducteur du véhicule aura besoin d'un freinage puissant, plus la force contraire correspondant à celle qui est exercée par le ressort pneumatique pour rappeler le piston 20 dans sa position de repos sera faible, allant même jusqu'à s'annuler pour des freinages puissants, facilitant ainsi l'effort à fournir par le conducteur.

On a donc bien réalisé conformément à l'invention un servomoteur dont le fonctionnement est pratiquement identique à celui d'un servomoteur classique lorsque les conditions normales sont remplies, c'est-à-dire où le piston 20 est constamment soumis à une force de rappel, à ceci près que cette force de rappel diminue à mesure que l'effort de freinage augmente, et où cette force de rappel n'exist plus en cas de défaillance de la source de dépression. En effet, dans ce dernier cas, on a vu que la pression atmosphérique règne ou s'établit rapidement dans la chambre arrière 18 du servomoteur. Il en est donc ainsi de la pression dans la chambre 230 de la valve 200. Cette dernière prend alors la position illustrée sur la moitié inférieure de la Figure 3, ainsi qu'on l'a expliqué plus haut, ouvrant ainsi le passage de valve 214-218 entre l'entrée 208 et la sortie 202. L'entrée 208 étant dans cette hypothèse en défaillance, et donc à la pression atmosphérique, cette même pression est communiquée au ressort pneumatique 60, qui devient inopérant puisque la chambre avant 16 du servomoteur est elle-même sous pression atmosphérique.

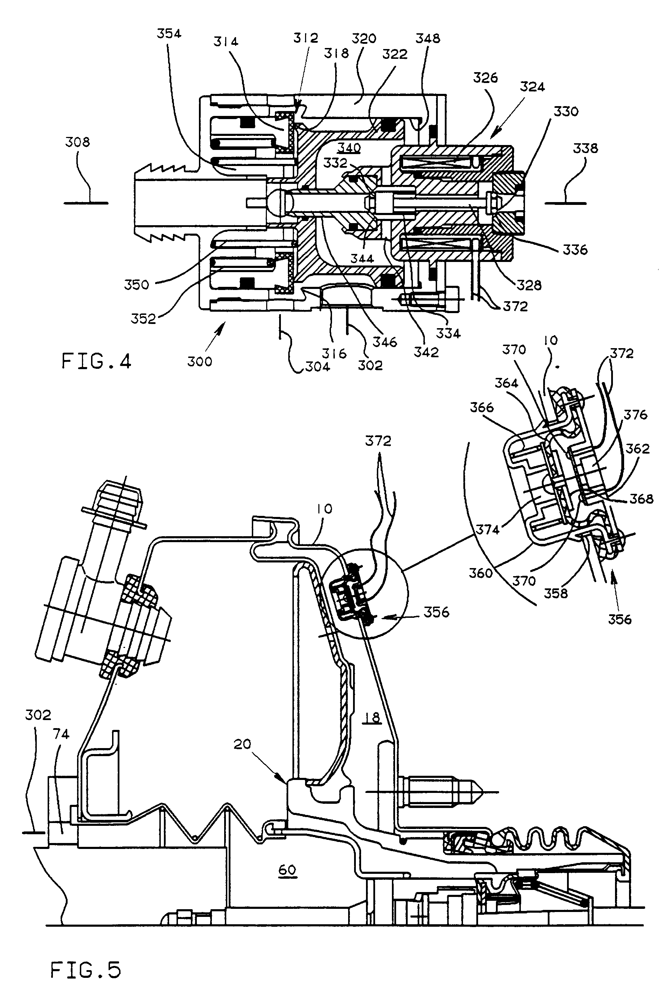

On a représenté sur la Figure 4 une variante de réalisation de valve pneumatique, dont la partie capteur est électro-pneumatique. On voit sur la Figure 4 une électrovalve pneumatique 300, qui comporte une sortie 302 destinée à être reliée à l'ouverture 74 et au ressort pneumatique 60 du servomoteur de la Figure 5, identique à celui de la Figure 1 à un détail près qui sera exposé plus loin. L'électrovalve 300 comporte également une entrée 304 reliée à l'atmosphère et une entrée 308 reliée à la source de dépression. Elle comporte également une valve à trois voies 312 formée par un clapet 314 coopérant avec deux sièges de valve 316 et 318. Le siège de valve 316 est fixe et est formé sur le corps 320 de la valve pneumatique 300. Le siège de valve 318 est mobile et est formé sur un ensemble mobile 322.

La valve 300 comporte une partie capteur et une partie émetteur. La partie capteur est constituée d'une électrovalve 324 comportant un bobinage 326 et une armature mobile 328. L'armature mobile 328 est tubulaire et porte à chacune de ses extrémités un élément de valve 330, 332. Dans la position de repos de l'électrovalve 324, son armature 328 est sollicitée vers la gauche de la Figure 4 par un ressort de rappel 334.

Dans cette position, elle ouvre un passage de valve 330-336 entre l'élément de valve 330 et un siège de valve 336 solidaire du corps 320, et permet ainsi la communication entre une entrée 338 reliée à l'atmosphère et une chambre 340 via l'intérieur de l'armature tubulaire et des perçages 342 dans le corps de l'électrovalve.

Dans cette même position, elle ferme un passage de valve 332-344 entre l'élément de valve 332 et un siège de valve 344 solidaire du corps 320, et interdit ainsi la communication entre l'entrée 308 reliée à la source de dépression et la chambre 340 via les perçages 342 et l'intérieur d'un passage tubulaire 346 solidaire du corps 320.

Au contraire, lorsqu'elle est excitée, l'électrovalve 324 donne à son armature tubulaire 328 une position de travail vers la droite de la Figure 4 où le passage de valve 330-336 est fermé et où le passage de valve 332-344 est ouvert. En d'autres termes, la position de repos de l'électrovalve met la chambre 340 en communication avec l'atmosphère, et sa position de travail met la chambre 340 en communication avec la source de dépression.

La chambre 340 est définie dans un alésage 348 du corps 320 de la valve par l'ensemble mobile 322 constitué d'un piston coulissant de façon étanche dans cet alésage 348 et autour du passage tubulaire 346. Le piston 322 est sollicité en arrière vers sa position de repos (à droite sur la Figure 4) par un ressort de rappel 350 et porte sur sa face tournée vers l'avant le siège de valve mobile 318. Ce dernier coopère avec le clapet 314, lui-même sollicité vers l'arrière (à droite sur la Figure 4) par un ressort de rappel 352 de façon à pouvoir également coopérer avec le siège de valve fixe 316 formé sur le corps 320 de la valve.

Le clapet 314 ainsi que les sièges de valve fixe 316 et mobile 318 se trouvent dans la partie émetteur de la valve 300, comprenant une chambre 354 reliée par l'entrée 308 à la source de dépression et par l'entrée 304 à l'atmosphère.

Le bobinage 326 de l'électrovalve 324 est excité lorsque le servomoteur est actionné en vue d'un freinage. Cette excitation peut par exemple être fournie par le circuit électrique d'avertissement de freinage (pour l'allumage des feux "stop"), par un capteur de déplacement du piston 20 du servomoteur, ou par un capteur de pression dans la chambre arrière 18 du servomoteur. Un tel capteur 356 est représenté sur la Figure 5, où l'on voit qu'il a été disposé de façon étanche dans une ouverture 358 pratiquée dans la paroi arrière de l'enveloppe 10. Le capteur 356 comporte une coquille rigide avant 360 et une coquille rigide arrière 362 emprisonnant entre elles une membrane souple 364. La membrane 364 est sollicitée vers l'arrière par un ressort 366 et comporte sur sa paroi arrière une partie conductrice 368. La coquille arrière 362 comporte deux plots de contact 370 reliés chacun à un conducteur 372.

Les coquilles avant et arrière sont chacune munies d'une ouverture 374 et 376 respectivement, de sorte que la face arrière de la membrane 364 est soumise à la pression atmosphérique et la face avant à la pression régnant dans la chambre arrière 18.

Lorsque le servomoteur est au repos, la chambre 18 est sous pression réduite, si bien que la différence des pressions sur les deux faces de la membrane 364 engendre sur celle-ci une force vers l'avant en butée sur la coquille avant. Lorsque le servomoteur est actionné, la pression dans la chambre 18 augmente faisant diminuer la force sur la membrane 364. L'action du ressort 366 devient alors prépondérante et repousse la membrane vers l'arrière. La partie conductrice 368 vient alors en butée au contact des plots 370, fermant ainsi le circuit électrique entre les conducteurs 372.

Lorsque le servomoteur est au repos, l'électrovalve 324 est elle-même au repos, le passage de valve 330-336 est ouvert mettant la chambre 340 à la pression atmosphérique qui s'exerce sur une des faces du piston 322. L'autre face de ce piston étant soumise à la pression réduite provenant de l'entrée 308, le piston 322 est sollicité vers l'avant à l'encontre de l'action du ressort 350. Dans cette position, le siège de valve mobile 318 repousse le clapet 314 vers l'avant, fermant le passage de valve 314-318 et ouvrant le passage de valve 314-316.

La pression atmosphérique présente à l'entrée 304 est alors admise à la sortie 302, et est communiquée à l'ouverture 74 et au ressort pneumatique 60 du servomoteur. Une force de rappel s'exerce donc sur le piston 20.

Lorsque le servomoteur est actionné, la pression dans la chambre arrière 18 augmente, ce qui a pour conséquence la fermeture du circuit électrique entre les conducteurs 372. Une source de courant (non représentée) étant intercalée sur l'un de ces conducteurs, ceci a également pour conséquence l'excitation de l'électrovalve 324, dont l'armature bascule alors vers la droite de la Figure 4. Le passage de valve 330-336 est alors fermé, alors que le passage de valve 332-344 s'ouvre, mettant la chambre 340 en communication avec la source de dépression à l'entrée 308. Les pressions sur les deux faces du piston 322 étant égales, celui-ci n'est plus soumis qu'à l'action du ressort 350 qui le repousse vers la droite de la Figure 4. Le clapet 314 étant également sollicité dans cette même direction va suivre le siège mobile 318 jusqu'à ce qu'il rencontre le siège de valve fixe 316. Le passage de valve 314-316 est donc fermé, alors que le passage de valve 314-318 s'ouvre, permettant ainsi la communication entre l'entrée 308 reliée à la source de dépression et la sortie 302 reliée au ressort pneumatique 60. La force de rappel sur le piston 20 du servomoteur diminue donc avec l'augmentation de la pression dans la chambre arrière 18.

On a donc bien réalisé conformément à l'invention un servomoteur dont le fonctionnement est pratiquement identique à celui d'un servomoteur classique dans les conditions normales, mais où le piston du servomoteur est soumis à une force de rappel inversement proportionnelle à l'effort de freinage, et où cette force de rappel n'existe plus en cas de défaillance de la source de dépression. En effet, dans ce dernier cas, la pression augmentant dans la chambre arrière 18 fait que le circuit électrique entre les conducteurs 372 est constamment fermé. L'électrovalve 328 est donc constamment excitée, mettant ainsi la chambre 340 en liaison avec l'entrée 308 où règne maintenant la pression atmosphérique. Les pressions sur les deux faces du piston 322 étant égales, le ressort 350 le repousse vers la droite de la Figure 4, avec fermeture subséquente du passage de valve 314-316 et ouverture du passage de valve 314-318, et donc mise en communication entre l'entrée 308 et la sortie 302. L'entrée 308 étant par hypothèse en défaillance, la pression atmosphérique qui y règne est donc transmise au ressort pneumatique 60, annulant ainsi la force de rappel sur le piston 20, conformément à l'objet de l'invention, pour un freinage plus facile en cas de défaillance de l'assistance pneumatique.

De plus, de façon particulièrement avantageuse selon l'invention, un servomoteur ainsi réalisé présente un encombrement identique à celui d'un servomoteur classique, en offrant un mode de fonctionnement plus confortable pour le conducteur en cas de défaillance de l'assistance pneumatique. L'encombrement du servomoteur peut même se trouver réduit, pour des performances identiques à celle d'un servomoteur classique, lorsque l'on utilise une valve de commande ou de modulation de la pression dans le ressort pneumatique. Une telle valve peut avantageusement être placée en un endroit quelconque du compartiment moteur du véhicule, et avoir un encombrement suffisamment faible pour ne pas poser de problèmes d'implantation.

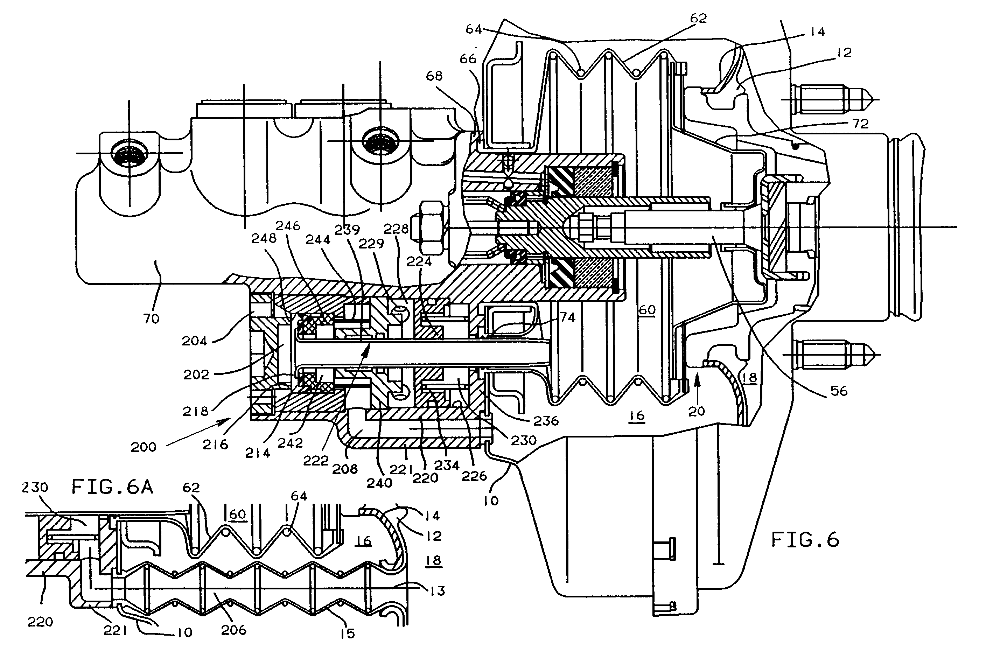

On pourra en particulier, disposer la valve de modulation de pression dans l'environnement immédiat du servomoteur, et même la relier structurellement à ce dernier, ou au maître-cylindre associé au servomoteur, ou aux deux, pour disposer d'un ensemble compact et d'installation facile. C'est ce qu'on a représenté sur les Figures 6 et 6A, où la valve pneumatique de modulation est par exemple un mode de réalisation de la valve schématisée à la Figure 3.

On voit sur la Figure 6 un servomoteur conforme à celui qui a été décrit en relation avec la Figure 1, où les mêmes éléments portent les mêmes numéros de référence, et qui ne sera donc pas décrit en détail. On a également représenté en coupe partielle le maître-cylindre 70 associé au servomoteur.

On a représenté également au voisinage immédiat du servomoteur et du maître-cylindre la valve pneumatique 200. L'ensemble mobile 222 de cette valve comporte le piston 224 coulissant de façon étanche dans l'alésage 226 du corps 220. Le piston 224 partage l'alésage 226 en une chambre 228 dans laquelle règne en permanence la pression atmosphérique grâce à des ouvertures 229 pratiquées dans le corps 220 et débouchant dans cette chambre, et une chambre 230 reliée à la chambre arrière 18 du servomoteur, par exemple par une canalisation passant à l'extérieur du servomoteur pour aboutir à une ouverture ménagée dans la paroi arrière de l'enveloppe 10, et avantageusement selon le mode de réalisation représenté sur la Figure 6A, par une canalisation 206 passant à l'intérieur du servomoteur. Une ouverture 13 est ménagée dans la jupe 14 du piston 20, et la membrane déroulante 12 est formée avec une extension tubulaire 15 pénétrant par cette ouverture 13 dans la chambre avant 16 jusqu'à la paroi avant de l'enveloppe 10, où elle est reçue de façon étanche. Le corps 220 est formé avec une extension 221 venant s'appliquer de façon étanche sur l'extension tubulaire 15 à l'endroit où elle est reçue dans la paroi avant de l'enveloppe 10.

Un ressort de compression 234 est disposé dans la chambre 230 entre le piston 224 et la paroi terminale 236 de l'alésage 226. Le piston 224 est solidaire d'une tige 238 qui traverse de façon étanche une paroi intermédiaire 240 de la valve 200 pour pénétrer dans la partie émetteur de la valve 200.

La partie émetteur de la valve 200 comporte une chambre 242 dans laquelle pénètre l'extrémité de la tige 238 qui forme un siège de valve mobile 218. Le siège de valve mobile 218 coopère avec un clapet 214, formé sur un piston 246 coulissant de façon étanche dans un alésage 248 formé dans le corps 220 de la valve. Le clapet 214 est également apte à coopérer avec un siège de valve fixe 216 formé sur le corps 220 de la valve 200, et il est sollicité par un ressort 244 en direction des sièges de valve 216 et 218. Le ressort 244 est disposé dans la chambre 242 délimitée par la paroi intermédiaire 240 et le piston 246 portant le clapet 214, cette chambre 242 étant reliée à la source de dépression par une entrée 208, cette entrée 208 étant avantageusement reliée à la chambre avant 16 du servomoteur, où règne cette dépression par une extension 221 du corps 220 de la valve 200 raccordée de façon étanche à une ouverture de la paroi avant de l'enveloppe 10 et débouchant dans la chambre avant 16.

Les sièges de valve fixe 216 et mobile 218 et le clapet 214 forment une valve à trois voies commandant ou modulant la pression à la sortie 202 destinée à être reliée à l'ouverture 74 et au ressort pneumatique 60 du servomoteur, par exemple par une canalisation passant à l'extérieur de la valve 200, et avantageusement selon le mode de réalisation représenté par l'intérieur de la tige 238 réalisé sous forme cylindrique, et dont l'extrémité arrière pénètre de façon étanche dans la paroi terminale 236 de la valve 200 et l'ouverture 74 dans la paroi avant de l'enveloppe 10.

Le fonctionnement de la valve pneumatique qui vient d'être décrite se déduit aisément des explications qui précèdent, et de celles qui ont été données en relation avec la Figure 3. Dans les conditions normales de fonctionnement, lorsque le servomoteur est en position de repos la pression réduite régnant dans la chambre arrière 18 est transmise, via l'ouverture 13, l'extension tubulaire 15 de la membrane 12, la communication 206 et l'extension 221 du corps 220, à la chambre 230. Cette pression réduite s'exerce sur la face arrière du piston 224, sur la face avant duquel s'exerce la pression atmosphérique régnant dans la chambre 228. Le piston 224 est donc sollicité vers l'arrière à l'encontre de l'action du ressort 234. La tige 238 est donc elle-aussi sollicitée vers l'arrière avec le siège de valve mobile 218, qui sollicite à son tour vers l'arrière le clapet 214 à l'encontre de l'action du ressort 244. Le clapet 214 est donc écarté du siège de valve fixe et permet la communication entre l'entrée 204 à la pression atmosphérique, la chambre 202 et l'intérieur de la tige 238 qui pénètre dans le ressort pneumatique 60, créant ainsi la force de rappel du piston 20.

Lorsque le servomoteur est actionné, l'augmentation de pression dans la chambre arrière 18 est transmise à la chambre 230 par l'ouverture 13 et l'extension tubulaire 15. La force dirigée vers l'arrière qui s'exerce sur le piston 224 diminue et le ressort 234 va faire avancer le piston 224, entraînant vers l'avant la tige creuse 238 et le siège de valve mobile 218. Le passage de valve 214-216 se ferme tandis que le passage de valve 214-218 s'ouvre. La chambre 202 communique donc avec la chambre 242, communiquant elle-même par la sortie 208 avec la chambre avant 16 du servomoteur où règne en permanence la dépression. Le ressort pneumatique 60 est donc mis en communication avec la chambre avant 16, faisant ainsi diminuer la force de rappel exercée sur le piston 20.

On a donc bien là encore réalisé conformément à l'invention un servomoteur dont le fonctionnement est identique à celui d'un servomoteur classique dans les conditions normales de fonctionnement, avec l'avantage d'une réduction de la force de rappel sur le piston 20 lors d'un actionnement des freins, exigeant ainsi un effort moindre du conducteur pour une action identique sur le maître-cylindre. Ce servomoteur présente lui-aussi les caractéristiques de l'invention, à savoir que la force de rappel du piston 20 n'existe plus en cas de défaillance de la source de dépression.

En effet, dans ce dernier cas, les chambres avant 16 et arrière 18 du servomoteur se retrouvent rapidement à la pression atmosphérique. Il en est donc ainsi des chambres 242 et 230 respectivement qui leur sont reliées. L'ensemble de la valve 200 est donc soumis à la pression atmosphérique.

L'ensemble mobile 222 est donc dans sa position avant sous l'effet du ressort 234, de même que le clapet 214 sous l'effet du ressort 244. Le passage de valve 214-216 est donc fermé, et le passage de valve 214-218 est ouvert, permettant la communication entre le ressort pneumatique 60 et la chambre avant 16 où règne la pression atmosphérique. La force de rappel exercée par le ressort pneumatique 60 sur le piston 20 diminue donc à mesure que la pression dans dans la chambre avant 16 augmente, jusqu'à s'annuler complètement.

Bien entendu, l'invention n'est pas limitée aux modes de réalisations qui ont été décrits à titre d'exemple, mais est susceptible de recevoir de nombreuses modifications qui apparaîtront à l'homme du métier. C'est ainsi par exemple que l'invention pourra être appliquée à des servomoteurs en tandem ou à chambre additionnelle d'assistance. De même, le ressort pneumatique de l'invention pourra être réalisé sous une autre forme, par exemple annulaire. On pourra également prévoir de réaliser la valve pneumatique de la Figure 6 d'une seule pièce avec le maître-cylindre ou fixée sur lui, ou d'une seule pièce avec le servomoteur ou fixée sur lui. Dans une telle construction, on pourra prévoir de réaliser le servomoteur ou le maître-cylindre de la Figure 6 associé à une valve pneumatique réalisée selon la Figure 4.

Pariellement, lorsque le servomoteur de l'invention est utilisé avec une valve de modulation, on pourra prévoir que celle-ci soit reliée à une source de pression supérieure à la pression atmosphérique pour procurer une force de rappel plus importante pour le retour en position de repos du piston du servomoteur, ou pour diminuer la surface du voile par l'intermédiaire duquel cette force de rappel est transmise au piston du servomoteur. Il suffira alors d'adapter en conséquence les tarages des ressorts de la valve de modulation. La défaillance de cette source de pression n'aura alors pour seule conséquence qu'un retour au fonctionnement de la valve de modulation qui a été décrit.

## Revendications

1. Servomoteur pneumatique d'assistance au freinage comportant une enveloppe (10) à l'intérieur de laquelle se trouve une paroi mobile (12, 14) rappelée dans une position arrière de repos par un moyen élastique et qui définit une chambre avant (16) reliée en permanence à une source de dépression (61) et une chambre arrière (18) reliée sélectivement à la chambre avant (16) ou à l'atmosphère par un moyen de valve (20a, 32a, 40) actionné par une tige de commande (34) susceptible de s'appuyer, par l'intermédiaire d'un plongeur (32), sur une tige de poussée (56), le moyen élastique de rappel de la paroi mobile (12, 14) comprenant un ressort pneumatique (60) disposé dans la chambre avant (16) du servomoteur, et des moyens de raccordement sélectif (100, 200, 300) étant prévus pour raccorder sélectivement le ressort pneumatique à l'une d'au moins deux sources de pression différentes, caractérisé en ce qu'un disque de réaction (58) est disposé entre le plongeur (32) et la tige de poussée (56), et en ce que le servomoteur comprend un détecteur de freinage (356) pour commander les moyens de raccordement sélectif (100, 200, 300) en fonction de l'apparition ou de la disparition d'une action de freinage et produire une assistance supplémentaire et sélective de freinage à l'apparition d'une telle action de freinage.

2. Servomoteur suivant la revendication 1, caractérisé en ce que les moyens de raccordement sélectif sont agencés pour raccorder le ressort pneumatique à ladite source de dépression lorsqu'une action de freinage est détectée.

3. Servomoteur suivant la revendication 1 ou 2, caractérisé en ce que les moyens de raccordement sélectif sont agencés pour raccorder le ressort pneumatique à une source de pression fournissant une pression au moins égale à la pression atmosphérique lorsque la disparition d'une action de freinage est détectée.

4. Servomoteur selon la revendication 3, caractérisé en ce que le ressort pneumatique (60) comprend une membrane (62) fixée de façon étanche à la paroi avant de l'enveloppe (10) et à un voile rigide (72) fixé de façon étanche au piston (20) ou à la tige de poussée (56).

5. Servomoteur suivant la revendication 1, caractérisé en ce que le détecteur de freinage est au moins sensible à l'apparition d'une pression relative déterminée dans la chambre arrière.

6. Servomoteur suivant la revendication 5, caractérisé en ce que lesdits moyens de raccordement sélectif comprennent une valve pneumatique (100, 200, 300).

7. Servomoteur suivant la revendication 6, caractérisé en ce que la valve pneumatique comprend une partie capteur constituant ledit détecteur de freinage.

8. Servomoteur suivant la revendication 6, caractérisé en ce que la valve pneumatique comprend une partie émetteur essentiellement constituée par une valve à trois voies dotée d'un clapet (214, 314) coopérant avec un siège de valve fixe (216, 316) et avec un siège de valve mobile (218, 318).

9. Servomoteur selon la revendication 7, caractérisé en ce que la partie capteur (224) comporte un piston (224) coulissant dans une chambre (230) où règne la pression de la chambre arrière (18) du servomoteur.

10. Servomoteur selon la revendication 7, caractérisé en ce que la partie capteur (324) est une électrovalve (324).

11. Servomoteur selon la revendication 10, caractérisé en ce que l électrovalve (324) est excitée par le signal fourni par un capteur (356) de la pression dans la chambre arrière (18) du servomoteur.

12. Servomoteur selon la revendication 10, caractérisé en ce que l'électrovalve (324) est excitée par le signal fourni par un capteur de déplacement du piston (20) du servomoteur.

13. Servomoteur selon l'ensemble des revendications 7 à 10, caractérisé en ce que le clapet (214, 314) de la valve à trois voies de la partie émetteur est actionné par le piston (224) ou l'électrovalve (324) de la partie capteur.

## Claims

1. Pneumatic brake-booster comprising a casing (10) inside which is situated a movable wall (12, 14) returned to a rear position of rest by a resilient means and defining a front chamber (16) permanently connected to a vacuum source (61) and a rear chamber (18) selectively connected to the front chamber (16) or to the atmosphere by a valve means (20a, 32a, 40) actuated by a control rod (34) adapted to bear, by means of a plunger (32), against a push rod (56), the resilient means for returning the movable wall (12, 14) comprising a pneumatic spring (60) disposed in the front chamber (16) of the booster, and selective connection means (100, 200, 300) being provided for selectively connecting the pneumatic spring to one of at least two different pressure sources, characterized in that a reaction disk (58) is disposed between the plunger (32) and the push rod (56), and in that the booster comprises a braking detector (356) in order to control the selective connection means (100, 200, 300) depending on the appearance or disappearance of a braking action and to produce additional and selective braking assistance upon the appearance of such a braking action.

2. Booster according to Claim 1, characterized in that the selective connection means are arranged to connect the pneumatic spring to said vacuum source when a braking action is detected.

3. Booster according to Claim 1 or 2, characterized in that the selective connection means are arranged to connect the pneumatic spring to a pressure source providing a pressure at least equal to atmospheric pressure when it is detected that the braking action has disappeared.

4. Booster according to Claim 3, characterized in that the pneumatic spring (60) consists of a diaphragm (62) fastened sealingly to the front wall of the casing (10) and to a rigid web (72) fastened sealingly to the piston (20) or to the push rod (56).

5. Booster according to Claim 1, characterized in that the braking detector is at least sensitive to the appearance of a given relative pressure in the rear chamber.

6. Booster according to Claim 5, characterized in that said selective connection means comprise a pneumatic valve (100, 200, 300).

7. Booster according to Claim 6, characterized in that the pneumatic valve comprises a sensor part constituting said braking detector.

8. Booster according to Claim 6, characterized in that the pneumatic valve comprises a transmitter part essentially consisting of a three-way valve equipped with a closure member (214, 314) cooperating with a stationary valve seat (216, 316) and with a movable valve seat (218, 318).

9. Booster according to Claim 7, characterized in that the sensor part (224) comprises a piston (224) sliding in a chamber (230) in which the pressure of the rear chamber (18) of the booster prevails.

10. Booster according to Claim 7, characterized in that the sensor part (324) is a solenoid valve (324).

11. Booster according to Claim 10, characterized in that the solenoid valve (324) is excited by the signal supplied by a sensor (356) sensing the pressure in the rear chamber (18) of the booster.

12. Booster according to Claim 10, characterized in that the solenoid valve (324) is excited by the signal supplied by a sensor sensing the displacement of the booster piston (20).

13. Booster according to any of Claims 7 to 10, characterized in that the valve closure member (214, 314) of the three-way valve of the transmitter part is actuated by the piston (224) or by the solenoid valve (324) of the transmitter part.

## Patentansprüche

1. Pneumatischer Bremsunterstützungs-Servomotor, mit einem Gehäuse (10), in dessen Inneren sich eine bewegliche Wand (12, 14) befindet, die in eine hintere Ruhestellung von einem Federmittel zurückgestellt wird und eine permanent mit einer Unterdruckquelle (61) verbundene vordere Kammer (16) sowie eine hintere Kammer (18) abgrenzt, die wahlweise mit der vorderen Kammer (16) oder mit der Atmosphäre über ein Ventilmittel (20a, 32a, 40) verbunden ist, das von einer Steuerstange (34) betätigt ist, die in der Lage ist, sich mittels eines Tauchkolbens (32) an einer Schubstange (56) abzustützen, wobei das Federmittel zum Rückstellen der beweglichen Wand (12, 14) eine Pneumatikfeder (60) enthält, die in der vorderen Kammer (16) des Servomotors angeordnet ist, und mit Mitteln (100, 200, 300) zum wahlweisen Verbinden, die dazu vorgesehen sind, die Pneumatikfeder wahlweise mit einer von wenigstens zwei Quellen von unterschiedlichen Drücken zu verbinden, dadurch gekennzeichnet, daß zwischen dem Tauchkolben (32) und der Schubstange (56) eine Reaktionsscheibe (58) angeordnet ist und daß der Servomotor eine Bremserfassungsvorrichtung (356) aufweist, um die Mittel (100, 200, 300) zum wahlweisen Verbinden in Abhängigkeit von dem Auftreten oder dem Verschwinden einer Bremswirkung zu steuern und eine zusätzliche und wahlweise Bremsunterstützung beim Auftreten einer solchen Bremswirkung zu erzeugen.

2. Servomotor nach Anspruch 1, dadurch gekennzeichnet, daß die Mittel zum wahlweisen Verbinden dafür vorgesehen sind, die Pneumatikfeder mit der Unterdruckquelle zu verbinden, wenn eine Bremswirkung erfaßt wird.

3. Servomotor nach Anspruch 1 oder 2, dadurch gekennzeichnet, daß die Mittel zum wahlweisen Verbinden dafür vorgesehen sind, die Pneumatikfeder, wenn das Verschwinden einer Bremswirkung erfaßt wird, mit einer Druckquelle zu verbinden, die einen Druck bereitstellt, der wenigstens gleich dem Atmosphärendruck ist.

4. Servomotor nach Anspruch 3, dadurch gekennzeichnet, daß die Pneumatikfeder (60) eine Membran (62) aufweist, die in dichter Weise an der vorderen Wand des Gehäuses (10) sowie an einer starren Abdeckung (72) befestigt ist, die in dichter Weise an dem Kolben (20) oder der Schubstange (56) befestigt ist.

5. Servomotor nach Anspruch 1, dadurch gekennzeichnet, daß die Bremserfassungsvorrichtung wenigstens auf das Auftreten eines bestimmen Relativdrucks in der hinteren Kammer anspricht.

6. Servomotor nach Anspruch 5, dadurch gekennzeichnet, daß die Mittel zum wahlweisen Verbinden ein Pneumatikventil (100, 200, 300) aufweisen.

7. Servomotor nach Anspruch 6, dadurch gekennzeichnet, daß das Pneumatikventil einen Aufnehmerabschnitt aufweist, der die Bremserfassungsvorrichtung bildet.

8. Servomotor nach Anspruch 6, dadurch gekennzeichnet, daß das Pneumatikventil einen Geberabschnitt aufweist, der im wesentlichen durch ein Dreiwegeventil gebildet ist, das mit einem Ventilelement (214, 314) versehen ist, das mit einem feststehenden Ventilsitz (216, 316) sowie mit einem beweglichen Ventilsitz (218, 318) zusammenwirkt.

9. Servomotor nach Anspruch 7, dadurch gekennzeichnet, daß der Aufnehmerabschnitt (224) einen Kolben (224) aufweist, der in einer Kammer (230) gleitet, in welcher der Druck der hinteren Kammer (18) des Servomotors herrscht.

10. Servomotor nach Anspruch 7, dadurch gekennzeichnet, daß der Aufnehmerabschnitt (324) ein Elektroventil (324) ist.

11. Servomotor nach Anspruch 10, dadurch gekennzeichnet, daß das Elektroventil (324) von dem Signal erregt wird, das von einem Aufnehmer (356) für den Druck in der hinteren Kammer (18) des Servomotors geliefert wird.

12. Servomotor nach Anspruch 10, dadurch gekennzeichnet, daß das Elektroventil (324) von dem Signal erregt wird, das von einem Aufnehmer für die Verstellung des Kolbens (20) des Servomotors geliefert wird.

13. Servomotor nach den Ansprüchen 7 bis 10, dadurch gekennzeichnet, daß das Ventilelement (214, 314) des Dreiwegeventils des Geberabschnitts von dem Kolben (224) oder dem Elektroventil (324) des Aufnehmerabschnitts betätigt wird.
